# EUROPÄISCHE PATENTANMELDUNG

(11) **EP 2 549 174 A2**
(43) Veröffentlichungstag der Anmeldung: **23.01.2013**
(21) Anmeldenummer: 12177291.7
(22) Anmeldetag: 20.07.2012
(51) Int. Cl.: F21S 8/04, F21V 17/12

(54) **Leuchte**

(30) Priorität: 22.07.2011 DE 102011079611
(71) Anmelder: Woschko Beteiligungen GmbH, 74189 Weinsberg (DE)
(72) Erfinder: Woschko, Manfred, 74189 Weinsberg (DE); Woschko, Donat, 74189 Weinsberg (DE)
(74) Vertreter: Beder, Jens

(57) **Zusammenfassung**

Die Erfindung betrifft eine Leuchte (1) mit einem Gehäuse (3) zur Aufnahme des Leuchtmittels (8) und wenigstens einem optischen Element (6,7) sowie mit einer Befestigungsvorrichtung (2). Die Befestigungsvorrichtung ist lösbar mit dem Gehäuse verbunden. Das Gehäuse ist mittels der Befestigungsvorrichtung an ein die Leuchte tragendes Teil (16) montierbar. An dem Gehäuse oder an der Befestigungsvorrichtung ist wenigstens ein Befestigungselement (22) vorgesehen. Dieses ist in eine korrespondierende Ausnehmung (23) in dem anderen Teil einführbar und dann verschiebbar, so dass in dem verschobenen Zustand ein Trennen des Gehäuses von der Befestigungsvorrichtung durch Aufbringen einer Zugkraft verhindert ist.

## Beschreibung

Die Erfindung betrifft eine Leuchte mit einem Gehäuse zur Aufnahme des Leuchtmittels und mit einer Befestigungsvorrichtung, mit dessen Hilfe das Gehäuse an ein tragendes Teil befestigbar ist.

In der modernen Beleuchtungstechnik kommen immer öfter LED-Leuchten zum Einsatz. Diese weisen ein Gehäuse auf, in dem die Leuchtmittel angeordnet sind. Zusätzlich zu dem Leuchtmittel ist oftmals ein transparenter Kunststoff vorgesehen, der einseitig benachbart zu einem Reflektor angeordnet ist. Die LEDs leuchten von einer Seite in den Kunststoff hinein. Das Licht tritt dann über einen Diffusor, der auf der von dem Reflektor abgewandten Seite des transparenten Kunststoffs angeordnet ist aus. Auf diese Weise lassen sich auch flächige Leuchten realisieren. Zur Ansteuerung der LEDs ist jedoch ein Netzteil erforderlich. Dieses Netzteil kann häufig in sogenannten Rasterdecken versteckt angeordnet werden. Die Größe des LED-Paneels, also des Gehäuses zur Aufnahme des Leuchtmittels sowie der optischen Elemente zur Lichtverteilung, wird dann so bemessen, dass ein Element einer solchen Rasterdecke durch die Leuchte ersetzt werden kann.

Alternativ hierzu kann vorgesehen sein, dass an dem Gehäuse beziehungsweise einem Rahmen des LED-Paneels Befestigungselemente angeordnet sind. Mithilfe dieser Befestigungselemente kann beispielsweise über ein Seilsystem das LED-Paneel an einer Decke aufgehängt werden. Problematisch ist hierbei allerdings die Unterbringung der Steuerelektronik beziehungsweise des Netzteils. Ferner sorgt die Aufhängung dafür, dass eine starre Anbindung an das tragende Gebäudeteil nicht erfolgt. Darüber hinaus kann aus ästhetischen Gründen eine solche Seilaufhängung unerwünscht sein.

Der Erfindung liegt daher die Aufgabe zugrunde, eine Leuchte zu schaffen, bei der eine verbesserte Befestigung an einem tragenden Gebäudeteil möglich ist.

Die Aufgabe wird durch die erfindungsgemäße Leuchte mit dem Merkmal nach Anspruch 1 gelöst.

Die erfindungsgemäße Leuchte weist ein Gehäuse zur Aufnahme des Leuchtmittels und wenigstens eines optischen Elements auf. Ferner umfasst die Leuchte eine Befestigungsvorrichtung, welche lösbar mit dem Gehäuse verbunden ist und mittels derer das Gehäuse an ein die Leuchte tragendes Teil montierbar ist. An dem Gehäuse oder an der Befestigungsvorrichtung ist wenigstens ein Befestigungselement vorgesehen, welches in eine korrespondierende Ausnehmung in dem anderen der Befestigungsvorrichtung oder dem Gehäuse einführbar ist. In diese Ausnehmung eingeführt ist das Befestigungselement verschiebbar, wobei im verschobenen Zustand ein Trennen des Gehäuses von der Befestigungsvorrichtung durch Aufbringen einer Zugkraft verhindert ist. Auf diese Weise lässt sich in der Befestigungsvorrichtung beispielsweise ein Raum schaffen, der die Steuerelektronik aufnimmt. Diese Befestigungsvorrichtung kann mit herkömmlichen Techniken, beispielsweise Schrauben, an dem tragenden Gebäudeteil fixiert werden. Die Montage des Gehäuses mit den darin angeordneten lichtgebenden Bauteilen kann dann ohne das Erfordernis einer weiteren Verschraubung mithilfe der Befestigungselemente und korrespondierenden Aussparungen erfolgen. Beispielsweise kann das Befestigungselement im Querschnitt T-förmig sein und in eine Aussparung greifen, welche im Wesentlichen Schlüssellochgeometrie hat. Im erweiterten Teil des Schlüssellochs kann der Kopf eingesetzt werden, um danach durch Verschieben in den schmaleren Teil des schlüssellochförmigen Ausschnitts gebracht zu werden. In diesem Zustand kann der Kopf nicht wieder durch den schmaleren Teil herausgezogen werden, wodurch sich eine Fixierung des Gehäuses an der Befestigungsvorrichtung ergibt.

Eine solche Anordnung ist einfach herstellbar und insbesondere komfortabel in der Bedienung. Dabei genügt eine Sicherung gegen Zugkräfte aus, um insbesondere bei an der Decke befestigten Leuchten eine sichere Verbindung zwischen dem Gehäuse und der Befestigungsvorrichtung zu erzielen.

Die Unteransprüche betreffen vorteilhafte Weiterbildungen der erfindungsgemäßen Leuchte. So ist es besonders bevorzugt, an dem Gehäuse zusätzlich eine Sicherungsvorrichtung anzubringen. Mithilfe dieser Sicherungsvorrichtung, welche an ihrem von dem Gehäuse abgewandten Ende mit der Befestigungsvorrichtung verbindbar ist, kann ein unbeabsichtigtes Verschieben des Gehäuses relativ zu der Befestigungsvorrichtung verhindert werden. Somit wird sichergestellt, dass die Befestigungselemente immer im schmalen Teil der Ausnehmung verbleiben und ein unbeabsichtigtes Lösen des Gehäuses wird verhindert.

Weiterhin ist es vorteilhaft, wenn das Gehäuse einen Rahmen und einen in den Rahmen flächenbündig einsetzbare Rückwand aufweist. Diese Rückwand ist besonders bevorzugt so ausgeführt, dass sie tragende Funktion übernimmt, also biegesteif ist. Auf diese Weise lassen sich auch großflächige Elemente realisieren, welche lediglich über die Befestigungselemente mit der Befestigungsvorrichtung verbunden sind. Die Steifigkeit der Rückwand wird dabei genutzt, um ein unerwünschtes Durchbiegen des Gehäuses samt der darin angeordneten Einbauten zu verhindern. Die Befestigungselemente sind dann vorzugsweise an dieser Rückwand angeordnet.

Weiterhin ist es vorteilhaft, wenn die Rückwand auf ihrer von der Befestigungsvorrichtung abgewandten Seite eine Nut aufweist. In dieser Nut können dann elektrische Leitungen untergebracht werden. Dies ist besonders vorteilhaft, da eine unsichtbare Zuführung der elektrischen Leitungen zu den Leuchtmitteln ermöglicht wird. Es kann das Netzteil beziehungsweise das Steuergerät zur Ansteuerung der LEDs an anderer Stelle angeordnet werden. Besonders vorteilhaft ist es dabei, die Befestigungsvorrichtung so auszubilden, dass die Steuereinheit bzw. das Netzteil in der Befestigungsvorrichtung aufgenommen werden kann. Hierzu ist bevorzugt, wenn die Befestigungsvorrichtung eine umlaufende Wand aufweist, welche einen Abstand zwischen dem Gehäuse und dem tragenden Teil des Gebäudes erzeugt. An dieser Wand ist dann wiederum vorzugsweise ein Flansch zur Fixierung an dem tragenden Teil und/oder ein gehäuseseitiger Flansch ausgebildet. In dem gehäuseseitigen Flansch ist bevorzugt die zu den Befestigungselementen korrespondierende Aussparung angeordnet.

Die Flansche sind dabei vorzugsweise so ausgebildet, dass sie nicht den durch die umlaufende Wand definierten Querschnitt der Befestigungsvorrichtung ausfüllen. Auf diese Weise kann auch bei einer Fixierung der Befestigungsvorrichtung beispielsweise an der Decke oder einer Wand sichergestellt werden, dass die Zugänglichkeit der gebäudeseitigen Stromzuführung einfach möglich ist. Ferner ist der gehäuseseitige Flansch ebenso ausgeführt, dass eine einfache Durchführung der elektrischen Leitungen hin zu der Nut in der Rückwand einfach möglich ist. Hierzu ist korrespondierend zur Lage des offenen Bereichs des Flanschs in der Rückwand ebenfalls eine Durchgangsöffnung vorgesehen.

Das Gehäuse weist vorzugsweise wenigstens zwei LEDs auf, die an Seitenflächen in einen transparenten Kunststoff hineinleuchten. Dabei ist auf der von der Befestigungsvorrichtung abgewandten Seite dieses transparenten Kunststoffs vorzugsweise ein Diffusor angeordnet, der das Gehäuse in Richtung zum Raum hin verschließt.

Eine bevorzugte Ausführungsform der Erfindung ist in der Zeichnung dargestellt und wird in der nachfolgenden Beschreibung näher erläutert.

Es zeigen:
- Fig. 1: einen Querschnitt durch eine erfindungsgemäße Leuchte; und
- Fig. 2: eine vergrößerte Darstellung im Ausschnitt II der Figur 1, zur Verdeutlichung der Verbindung zwischen dem Gehäuse und der Befestigungsvorrichtung.

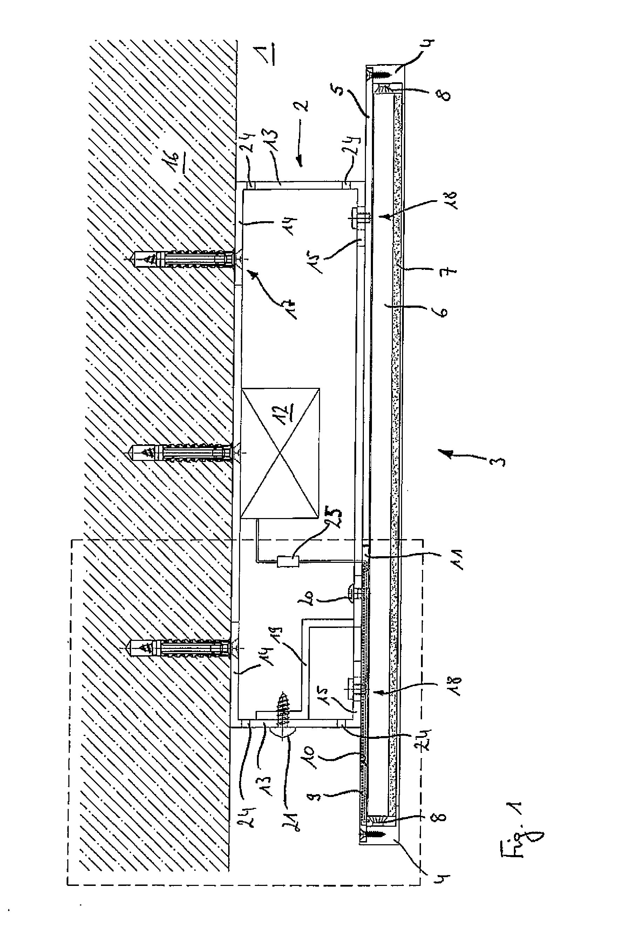

In der Figur 1 ist ein Querschnitt durch die erfindungsgemäße Leuchte, welche zum Beispiel an einer Decke befestigt ist dargestellt. Die Leuchte 1 besteht im Wesentlichen aus zwei Elementen, nämlich der Befestigungsvorrichtung 2 sowie einem damit zu verbindenden Gehäuse 3. Das Gehäuse 3 umfasst einen Rahmen 4, welcher beispielsweise rechteckig verlaufen kann. Der Rahmen 4 weist umlaufend eine Stufe auf, in die eine Rückwand 5 eingesetzt wird. Die Höhe der Stufe ist so bemessen, dass die Rückwand 5 flächenbündig an der äußeren Umfangskante des Rahmens 4 abschließt. In dem Rahmen 4 ist ferner vorzugsweise im Bereich der Stufe eine umlaufende Nut vorgesehen, so dass in einfacher Weise die Rückwand 5 durch Verschrauben in die Nut an dem Rahmen 4 befestigt werden kann. Die Dicke der Rückwand 5 ist vorzugsweise so bemessen, dass eine gewisse Biegesteifigkeit erreicht ist, so dass ein Durchbiegen des gesamten Gehäuses 3 sicher vermieden wird. Parallel zu der Rückwand 5 erstreckt sich ein transparenter Kunststoff 6. Zur Raumseite also lichtemittierenden Seite des Gehäuses 3 hin wird auf den transparenten Kunststoff 6 ein Diffusor 7 angeordnet, um eine gleichmäßige Lichtabgabe der gesamten Leuchte zu erzielen. Zwischen dem transparenten Kunststoff 6 und der Rückwand 5 ist ein Reflektor angeordnet, um das von wenigstens zwei LED-Elementen 8 an einer Seitenkante des transparenten Kunststoffs 6 eingebrachte Licht durch den Diffusor 7 zum Raum hin abzugeben. Solche Gehäuse mit darin angeordneten optischen Elementen und Leuchtmitteln sind an sich bekannt. Diese sogenannten LED-Paneele werden dann, wie es einleitend erläutert wurde, im Raum angeordnet.

Die Rückwand 5 weist auf ihrer zu den transparenten Kunststoff 6 hin orientierten Seite eine Nut 10 auf, in der elektrische Leitungen 9 angeordnet sind. Diese elektrischen Leitungen 9 versorgen die LEDs mit Strom. Die elektrischen Leitungen 9 werden über eine Öffnung 11 aus dem Gehäuse 3 herausgeführt um sie so über eine Steckverbindung 25 mit einer elektrischen Steuereinheit 12 verbinden zu können.

Die elektrische Steuereinheit 12 ist in der Befestigungsvorrichtung 2 angeordnet. Die Befestigungsvorrichtung 2 weist hierzu eine umlaufende Wand 13 auf, welche einen Raum zwischen einem tragenden Teil 16, an dem die Leuchte 1 zu befestigen ist, umgibt und an der z. B. die Steuereinheit fixiert ist. Zum Abführen von Wärme können in der umlaufenden Wand Lüftungsschlitze 24 oder -löcher angeordnet sein. Zur Fixierung der Befestigungsvorrichtung 2 an dem tragenden Teil 16 ist ein Flansch 14 vorgesehen. Der Flansch 14 kann umlaufend ausgebildet sein, wobei nicht der gesamte von der umlaufenden Wand 13 umfasste Querschnitt abgedeckt wird. Vorzugsweise verbleibt eine Öffnung, so dass eine leichte Einführung des gebäudeseitigen Stromanschlusses ist. Im Bereich des Flanschs 14 sind Verschraubungen zur Fixierung der Leuchte 1 gebäudeseitig angeordnet.

Auf der von dem Flansch 14 abgewandten Seite ist an der umlaufenden Wand 13 ein gehäuseseitiger Flansch 15 ausgebildet. Auch dieser gehäuseseitige Flansch 15 lässt einen Teil des Querschnitts offen, um die Einführung der elektrischen Leitungen 9 zu ermöglichen.

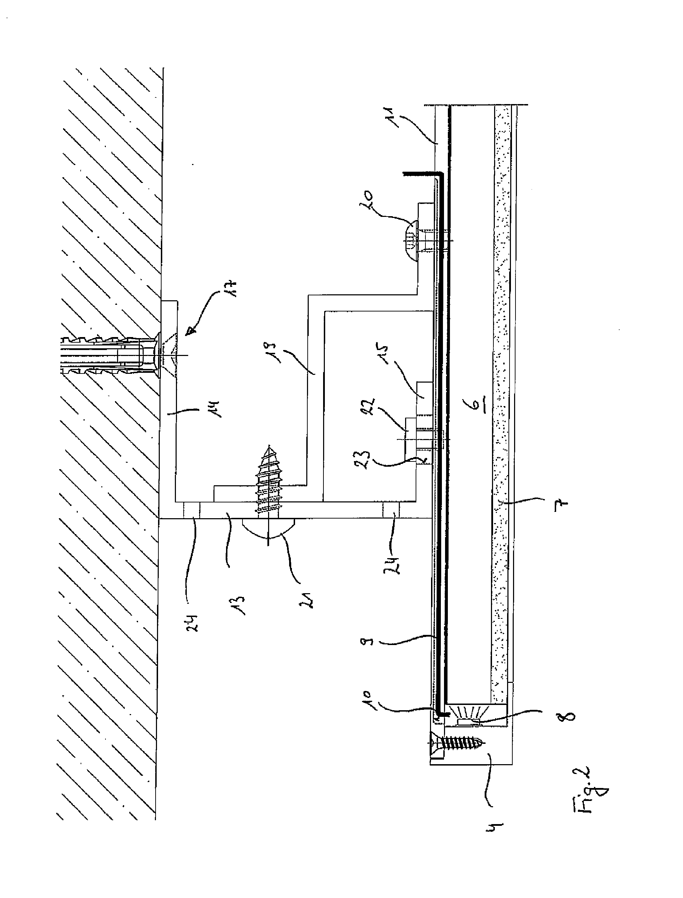

Die Fixierung des Gehäuses 3 an der Befestigungsvorrichtung 2 erfolgt über Befestigungen 18 im Bereich des gehäuseseitigen Flanschs 15 der Befestigungsvorrichtung 2. Der genaue Aufbau dieser Befestigungen 18, 19 wird nachfolgend unter Bezugnahme auf die Fig. 2 noch näher erläutert.

Da die Befestigung über ein einfaches Einsetzen und Verschieben des Gehäuses 3 relativ zu der Befestigungsvorrichtung 2 ermöglicht wird, ist ein Sicherungselement 19 vorgesehen, das ein unbeabsichtigtes Verschieben des Gehäuses 3 verhindert. Dieses Sicherungselement 19 ist mittels eines Fixierelements, beispielsweise einer Schraube 20 an der Rückwand 5 fixiert. Im dargestellten Ausführungsbeispiel ist es im Wesentlichen Z-förmig ausgestaltet und so dimensioniert, dass es bei korrekt montiertem Gehäuse 3 mit seinem von der Rückwand 5 abgewandten Ende an der umlaufenden Wand 13 zu liegen kommt. Dort kann es mithilfe einer weiteren Schraube 21 fixiert werden. Eine solche Fixierung des Sicherungselements 19 einerseits an der Rückwand 5 und andererseits an der umlaufenden Wand 13 verhindert ein unbeabsichtigtes Verschieben des Gehäuses 3 gegenüber der Befestigungsvorrichtung 2.

Die Fig. 2 zeigt eine vergrößerte Darstellung im Ausschnitt I der Fig. 1. Es ist zu erkennen, dass ein Befestigungselement 22 der Befestigung 18 an der Rückwand 5 des Gehäuses 3 fixiert ist. Dies kann beispielsweise durch Einschrauben in eine Gewindebohrung der Rückwand 5 erfolgen. Das Befestigungselement 22 ist im Querschnitt im Wesentlichen T-förmig ausgebildet und umfasst somit einen Stiel sowie einen gegenüber diesem im Radius vergrößerten Kopf.

In den gehäuseseitigen Flansch 15 der Befestigungsvorrichtung 2 ist eine Ausnehmung eingebracht. Diese Ausnehmung weist einen erweiterten Bereich sowie einen schmaleren Bereich auf, die miteinander verbunden sind. Während der erweiterte Bereich in seiner radialen Ausdehnung so dimensioniert ist, dass der Kopf des Befestigungselementes 15 hindurchgeführt werden kann, ist der dem gegenüber schmalere Bereich so dimensioniert, dass lediglich der Stiel des Befestigungselements 22 dort hinein verschoben werden kann. Auf diese Weise kommt in den schmaleren Bereich der Ausnehmung 23 der Kopf des Befestigungselements 22 in Anlage mit der von dem Gehäuse 3 abgewandten Fläche des gehäuseseitigen Flansches 15. Ein Herausziehen des Befestigungselements 22 aus der Ausnehmung 23 in den schmaleren Bereich ist damit unmöglich.

Solche Befestigungen können über den Umfang entlang des gehäuseseitigen Flansches 15 verteilt angeordnet sein. Die Anzahl und Positionierung der Befestigungen 18, 19 richtet sich dabei nach der Geometrie der Leuchte.

Die erfindungsgemäße Leuchte hat den Vorteil, dass eine einfache Befestigung des Gehäuses 3 an der Befestigungsvorrichtung 2 möglich ist, ohne dass eine Verschraubung erforderlich wird. Lediglich zur Sicherung ist eine einzelne Schraube vorteilhaft, mit der das Sicherungselement an der Befestigungsvorrichtung 2 befestigt werden kann. Die eigentliche Fixierung des Gehäuses 3 an der Befestigungsvorrichtung 2 ist dagegen unsichtbar. Zudem ist es vorteilhaft, dass die Steuerelektronik zum antreiben der LED-Elemente in einen innerhalb der Befestigungsvorrichtung 2 ausgebildeten Volumen angeordnet werden kann. Damit ist sie nicht nur optisch vorteilhaft versteckt, sondern gleichzeitig durch die umlaufende Wand 13 auch geschützt. Die Befestigung der Befestigungsvorrichtung 2 an dem tragenden Teil kann in herkömmlicher Weise an dem Flansch 14 mittels Verschraubungen 17 erfolgen.

## Patentansprüche

1. Leuchte mit einem Gehäuse (3) zur Aufnahme des Leuchtmittels (8) und wenigstens eines optischen Elements (6, 7) und mit einer Befestigungsvorrichtung (2), welche lösbar mit dem Gehäuse (3) verbunden ist und mittels dessen das Gehäuse (3) an ein die Leuchte (1) tragendes Teil (16) montierbar ist, wobei an dem Gehäuse (3) oder der Befestigungsvorrichtung (2) wenigstens ein Befestigungselement (22) vorgesehen ist, welches in eine korrespondierende Ausnehmung (23) in dem anderen der Befestigungsvorrichtung (2) oder dem Gehäuse (3) einführbar und dann verschiebbar ist wobei in verschobenem Zustand ein Trennen des Gehäuses (3) von der Befestigungsvorrichtung (2) durch Aufbringen einer Zugkraft verhindert ist.

2. Leuchte nach Anspruch 1,
**dadurch gekennzeichnet,**
**dass** an dem Gehäuse (3) eine Sicherungsvorrichtung (19) angebracht ist, welche an ihrem von dem Gehäuse (3) abgewandten Ende mit der Befestigungsvorrichtung (2) verbindbar ist.

3. Leuchte nach einem der Ansprüche 1 oder 2,
**dadurch gekennzeichnet,**
**dass** das Gehäuse (3) eine Wand (13) und eine die Wand (13) flächenbündig einsetzbare Rückwand (5) aufweist.

4. Leuchte nach Anspruch 3,
**dadurch gekennzeichnet,**
**dass** das Befestigungselement (22) an der Rückwand (5) angebracht ist.

5. Leuchte nach Anspruch 3 oder 4,
**dadurch gekennzeichnet,**
**dass** in die Rückwand (5) auf ihrer von der Befestigungsvorrichtung (2) abgewandten Seite eine Nut (10) zur Aufnahme von elektrischen Leitungen (9) ausgebildet ist.

6. Leuchte nach einem der Ansprüche 1 bis 5,
**dadurch gekennzeichnet,**
**dass** die Befestigungsvorrichtung (2) eine umlaufende, einen Abstand zwischen dem Gehäuse und dem tragenden Teil erzeugende Wand und einen Flansch (14) zur Fixierung an dem tragenden Teil (16) und/oder einen gehäuseseitigen Flansch (15) aufweist.

7. Leuchte nach Anspruch 6,
**dadurch gekennzeichnet,**
**dass** der/die Flansche (14, 15) die von der umlaufenden Wand (13) umfasste Fläche nicht vollständig verschließen, so dass eine Durchführung von elektrischen Leitungen ermöglicht ist.

8. Leuchte nach einem der Ansprüche 1 bis 7,
**dadurch gekennzeichnet,**
**dass** in der Befestigungsvorrichtung (2) ein Raum zur Aufnahme einer elektrischen Versorgungseinrichtung (12) des Leuchtmittels (8) vorgesehen ist.

9. Leuchte nach einem der Ansprüche 1 bis 8,
**dadurch gekennzeichnet,**
**dass** in dem Gehäuse (2) wenigstens zwei LEDs (8) als Leuchtmittel angeordnet ist und zwischen den beiden LEDs ein Reflektor ausgebildet ist.

10. Leuchte nach einem der Ansprüche 1 bis 9,
**dadurch gekennzeichnet,**
**dass** das Gehäuse (3) als flaches Paneel ausgebildet ist, dessen von der Befestigungsvorrichtung (2) abgewandte Seite durch einen Diffusor (7) gebildet wird.
